# EUROPEAN PATENT SPECIFICATION

(11) **EP 3 831 698 B1**
(45) Date of publication and mention of the grant of the patent: **12.10.2022**
(21) Application number: 19844197.4
(22) Date of filing: 13.05.2019
(51) Int. Cl.: B62J 37/00, B62J 9/00, B62J 25/00, B62J 35/00, F02M 25/08, B62M 7/02, B62J 9/14

(54) **SCOOTER-TYPE VEHICLE**
ROLLERARTIGES FAHRZEUG
VÉHICULE DE TYPE SCOOTER

(30) Priority: 31.07.2018 JP 2018144412
(43) Date of publication of application: 09.06.2021
(73) Proprietor: HONDA MOTOR CO., LTD., Minato-ku Tokyo 107-8556 (JP)
(72) Inventor: ISHII, Tsubasa, Wako-shi, Saitama 351-0193 (JP); TAKAISHI, Ayumu, Wako-shi, Saitama 351-0193 (JP); SHIMIZU, Koichiro, Wako-shi, Saitama 351-0193 (JP)
(74) Representative: Herzog, Markus
(86) International application number: PCT/JP2019/018957
(87) International publication number: WO 2020/026556

(56) References cited:
- JP-A- H04 353 257
- JP-A- H04 362 484
- JP-A- 2003 182 674
- JP-A- 2003 246 287
- JP-A- 2011 213 227
- JP-A- 2013 100 053
- JP-A- 2014 061 851
- JP-A- 2016 064 766
- JP-A- 2016 064 766
- JP-B2- 5 719 738
- US-A1- 2010 243 354
- US-A1- 2013 247 881

## Description

### [Technical Field]

The present invention relates to a scooter-type vehicle.

### [Background Art]

Conventionally, in a saddled vehicle, a structure for returning an evaporated fuel adsorbed on a canister to an engine has been known, and a structure in which a purge control valve for opening and closing a path of a purge hose is disposed has been known (see, for example, JP 2012-159023 A1). In JP 2012-159023 A1, there is disclosed a structure of a scooter-type vehicle of a center tunnel type in which a purge control valve is disposed on a front side of a fuel tank disposed on a vehicle front side of an engine.

JP 5719738 B2, on which the preamble of claim 1 is based, discloses the purge control valve disposed behind the fuel tank.

US 2010/243354 A1 does not relate to the scooter-type vehicle of the flat floor type and merely discloses that the canister and the purge control valve are disposed by making effective use of the space produced at the position lower than the upper end of the tube portion, rearward of the tube portion, and upward of the tank main portion in the fuel tank.

### [Summary]

### [Technical Problem]

In the conventional structure, however, since the canister is disposed on an upper side of the fuel tank and the purge control valve is disposed on a front side of the fuel tank, the purge control valve, the canister, and the engine are disposed at mutually spaced positions, so that the length of the purge hose is elongated.

The present invention has been made in consideration of the above-mentioned circumstance. It is an object of the present invention to compactly dispose a structure for returning an evaporated fuel adsorbed on a canister to an engine.

### [Solution to Problem]

The present invention provides a scooter-type vehicle according to claim 1. The scooter type vehicle has an accommodation box (27) disposed on an upper side of an engine (13), in which a purge control valve (127) is disposed on a front side of the accommodation box (27), supported by a seat support stay (24), and disposed on a rear side of an under-seat cover (35).

In the invention as above, the scooter-type vehicle has an underfloor tank with a fuel tank (38) disposed on a front side of the engine (13) and with a flat floor (11) provided on an upper side of the fuel tank (38). The purge control valve (127) may be disposed above a canister (110) and the purge control valve (127) is disposed at a position not overlapping with the accommodation box (27) in side view.

In addition, in the invention as above, the accommodation box (27) may be disposed on an upper side of the purge control valve (127) in plan view.

Besides, in the invention as above, the canister (110) may be disposed on one side from a vehicle width directionally vehicle center, and purge hoses (123, 128) are routed from one side to the other side along the seat support stay (24).

In addition, in the invention as above, a downward projecting portion (162) projecting downward from a front portion of the accommodation box (27) may be provided, and the purge control valve (127) is disposed on a front side of the downward projecting portion (162).

Besides, in the invention as above, a recess (164) recessed on a vehicle rear side of a front portion of the accommodation box (27) in plan view may be provided.

In addition, in the invention as above, a joint section (133A) connecting purge hoses (123, 128) and an intake pipe (133) is present on an opposite side of an intake passage (130) from throttle cables (140, 141) in a vehicle width direction.

Besides, in the invention as above, a bending portion (128A) of the purge hose (128) may be provided on an opposite side of the intake passage (130) from a fuel hose (101) in the vehicle width direction.

In addition, in the invention as above, a fuel tank (38) is disposed on a front side of the engine (13), a lengthwise direction of the canister (110) is disposed to be oriented in a longitudinal vehicle direction, while hoses (122, 123, 124, 125) extend in a longitudinal vehicle direction of the canister (110), the canister (110) is disposed at a position overlapping with the fuel tank (38) in side view and is disposed below an uppermost end (38A3) of the fuel tank (38).

Besides, in the invention as above, a canister charge joint (110C) is provided at a lowermost side of the charge hose (122).

### [Advantageous Effects of Invention]

The scooter-type vehicle according to the present invention is a scooter-type vehicle having the accommodation box disposed on the upper side of the engine, in which the purge control valve is disposed on the front side of the accommodation box, supported by the seat support stay, and disposed on the rear side of the under-seat cover. According to this configuration, with the purge control valve supported by the seat support stay on the front side of the accommodation box, the purge control valve can be disposed compactly. In addition, since the purge control valve can be disposed in the vicinity of the engine, the length of the purge hose can be shortened.

In the invention as above, in the scooter-type vehicle having the underfloor tank with the fuel tank disposed on the front side of the engine and with the flat floor provided on the upper side of the fuel tank, the purge control valve may be disposed above the canister, and the purge control valve may be disposed at a position not overlapping with the accommodation box in side view. According to this configuration, since the purge control valve is disposed above the canister, the fuel can be restrained from excessively flowing into the engine even when the purge control valve is open. Besides, with the purge control valve disposed at a position not overlapping with the accommodation box in side view, the capacity of the accommodation box can be restrained from being reduced.

In addition, in the invention as above, the accommodation box may be disposed on the upper side of the purge control valve in plan view. According to this configuration, it can be ensured that the purge control valve is not visually recognized even when the seat is opened and closed. Besides, the purge control valve can be protected by the accommodation box.

In addition, in the invention as above, the canister may be disposed on one side from a vehicle width directionally vehicle center, and the purge hose may be routed from one side to the other side along the seat support stay. According to this configuration, the routing properties of the purge hose can be improved.

Besides, in the invention as above, a downward projecting portion projecting downward from a front portion of the accommodation box may be provided, and the purge control valve may be disposed on the front side of the downward projecting portion. According to this configuration, the purge control valve can be disposed in a state in which the capacity of the accommodation box is enlarged.

In addition, in the invention as above, a recess which is recessed may be provided on the vehicle rear side of a front portion of the accommodation box in plan view. Therefore, it is easy to dispose an intake pipe at a position near the purge control valve, without interfering with the accommodation box.

Besides, in the invention as above, a joint section connecting the purge hose and the intake pipe may be present on the opposite side of the intake passage from a throttle cable in the vehicle width direction. According to this configuration, the purge hose can be connected to the intake passage of the engine without interference with the throttle cable.

In addition, in the invention as above, a bending portion of the purge hose may be provided on the opposite side of the intake passage from the fuel hose in the vehicle width direction. According to this configuration, interference between the bending portion of the fuel hose and the bending portion of the purge hose can be restrained.

Besides, in the invention as above, the fuel tank may be disposed on the front side of the engine, the lengthwise direction of the canister may be disposed to be oriented in the longitudinal vehicle direction, the hoses may extend in the longitudinal vehicle direction of the canister, and the canister may be disposed at a position overlapping with the fuel tank in side view and be disposed below the uppermost end of the fuel tank. According to this configuration, the canister can be compactly disposed in the vicinity of the fuel tank, the hoses connected to the canister can be shortened, and the routing properties of the hoses connected to the canister can be improved.

In addition, in the invention as above, the canister charge joint may be provided at the lowermost side of the charge hose. According to this configuration, the charge hose can be prevented from becoming valley piping, namely, a state of piping having a part protuberant to the lower side, and it is unnecessary to newly provide a drain hose for draining the fuel, so that a reduction in cost can be realized.

### [Brief Description of Drawings]

[FIG. 1]

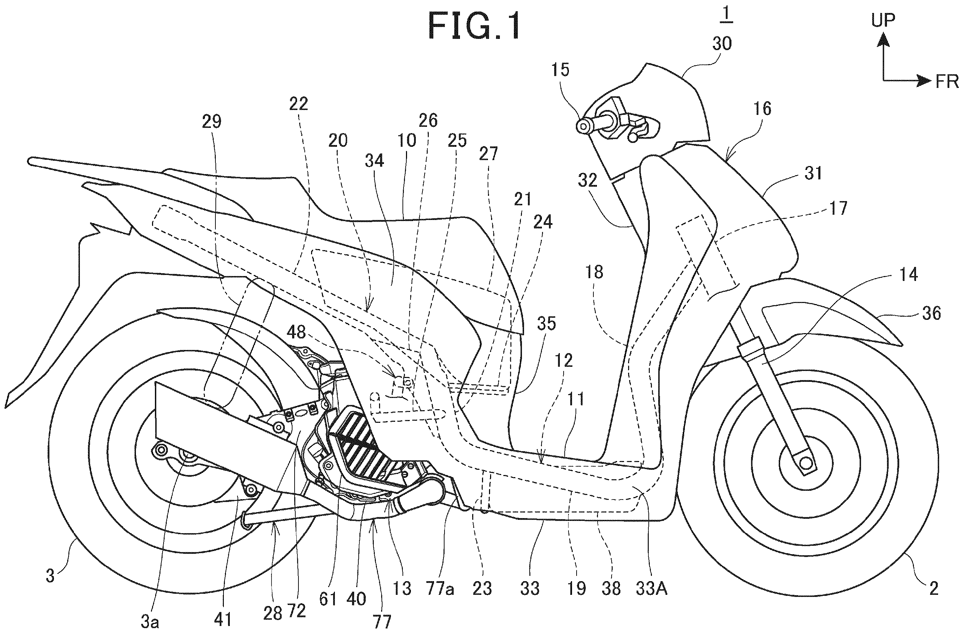

   FIG. 1 is a right side view of a motorcycle according to an embodiment of the present invention.
[FIG. 2]

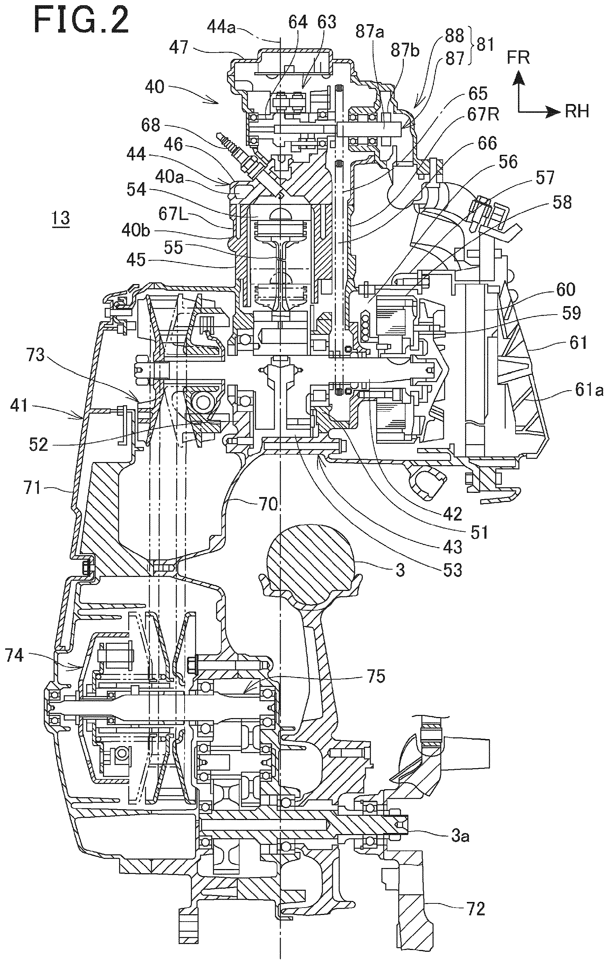

   FIG. 2 is a sectional view of a unit swing engine.
[FIG. 3]

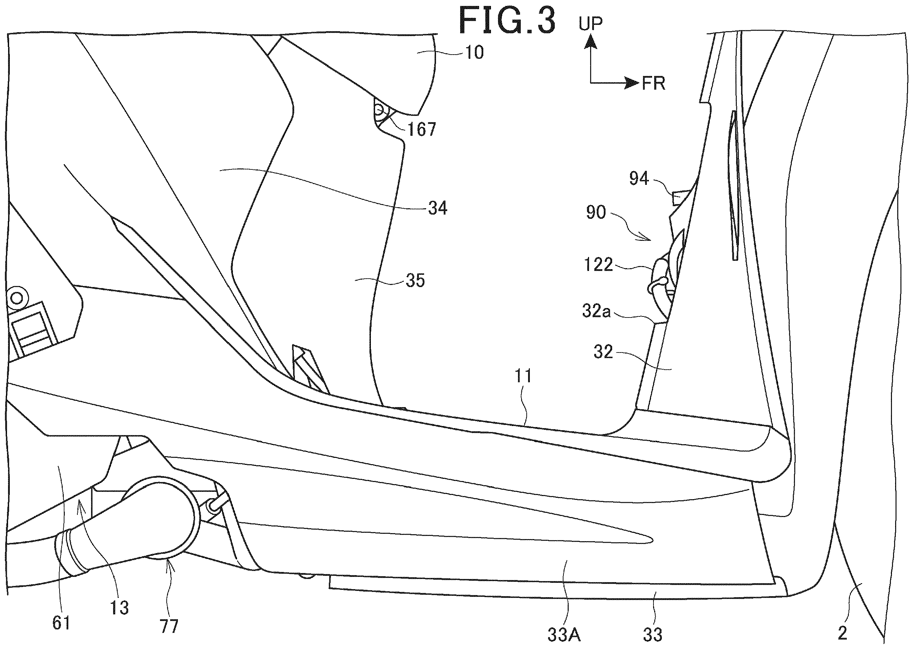

   FIG. 3 is an enlarged view of the part of a step floor of FIG. 1.
[FIG. 4]

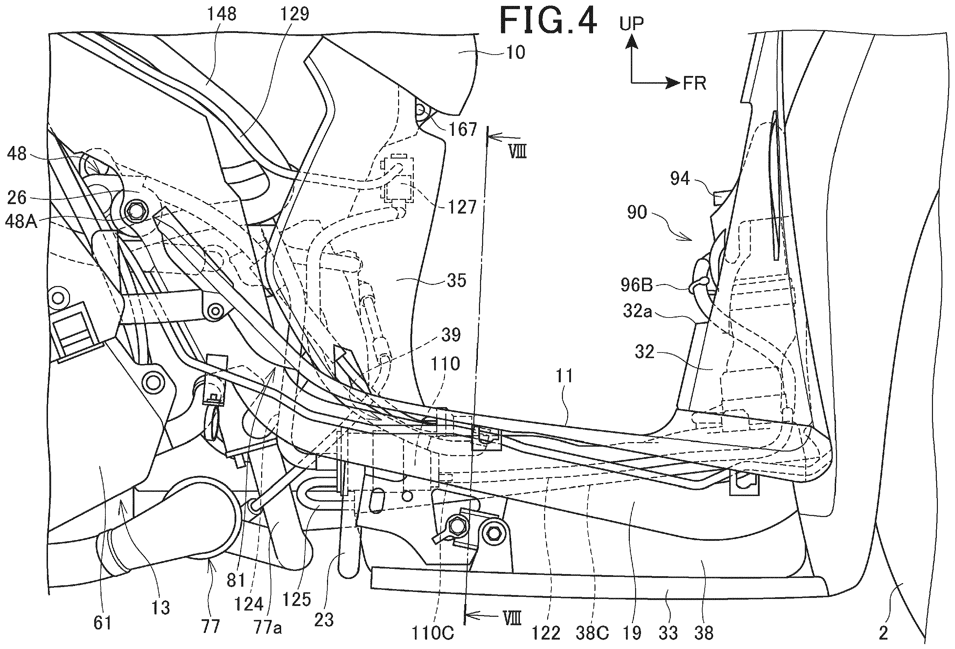

   FIG. 4 is a figure obtained by omitting an under side cover from FIG. 3.
[FIG. 5]

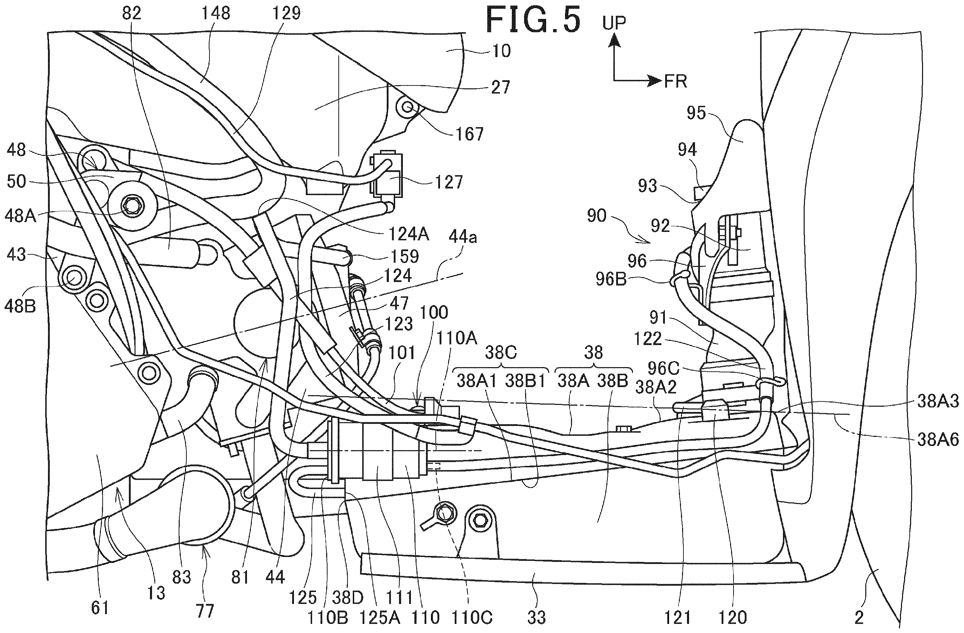

   FIG. 5 is a right side view of a fuel tank.
[FIG. 6]

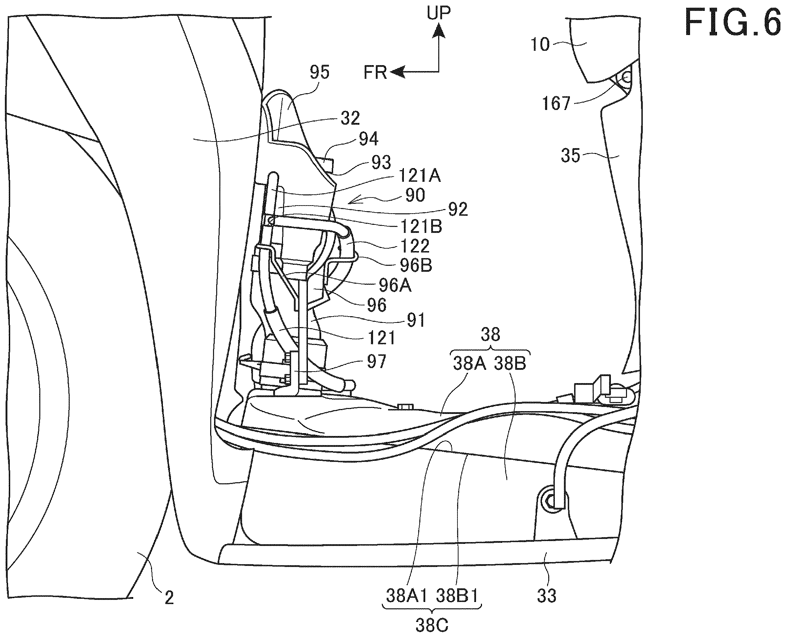

   FIG. 6 is a left side view of the fuel tank.
[FIG. 7]

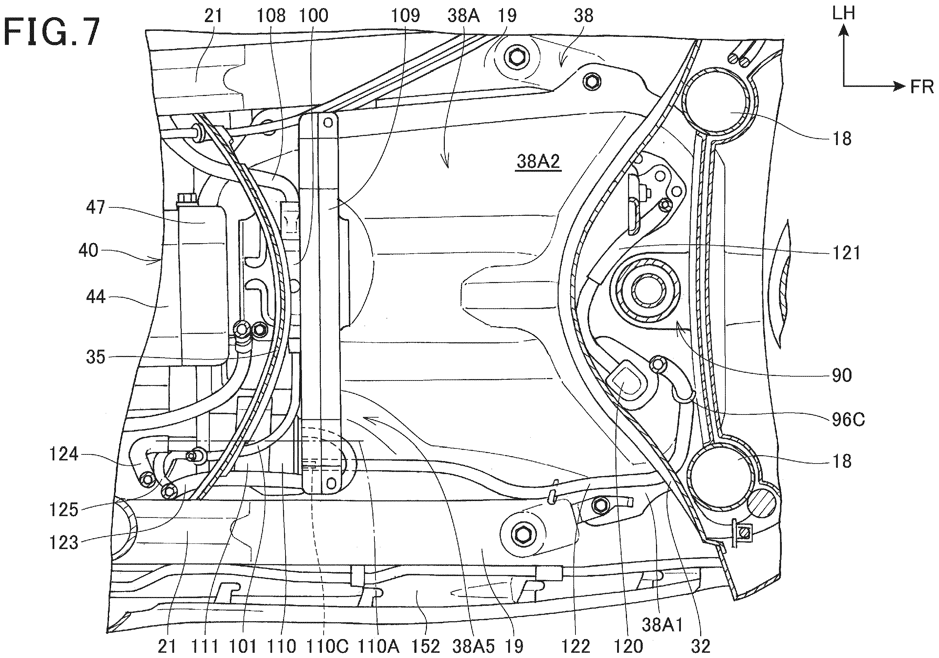

   FIG. 7 is a plan view of the fuel tank.
[FIG. 8]

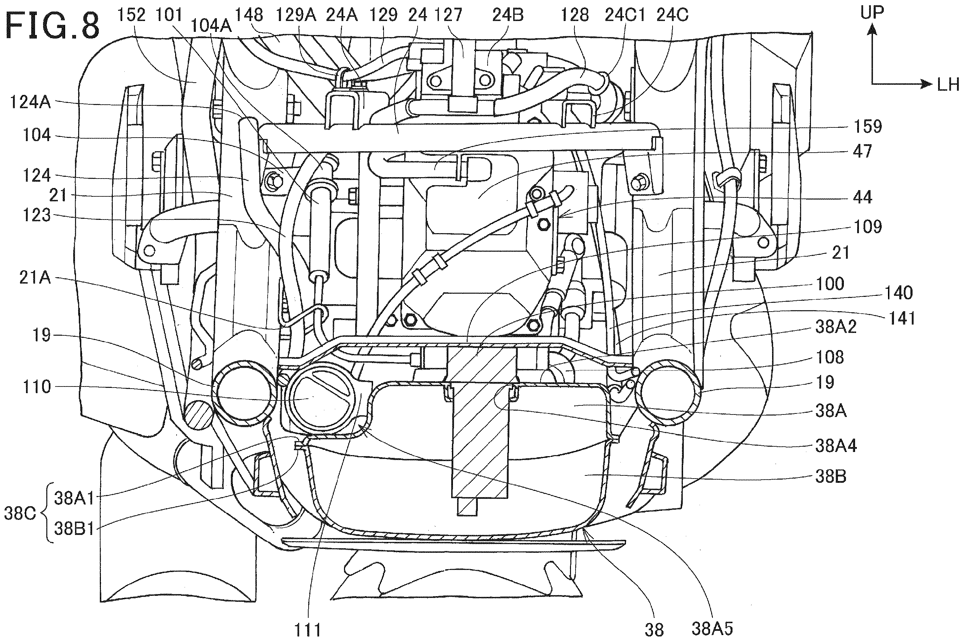

   FIG. 8 is a sectional view taken along line VIII-VIII of FIG. 4.
[FIG. 9]

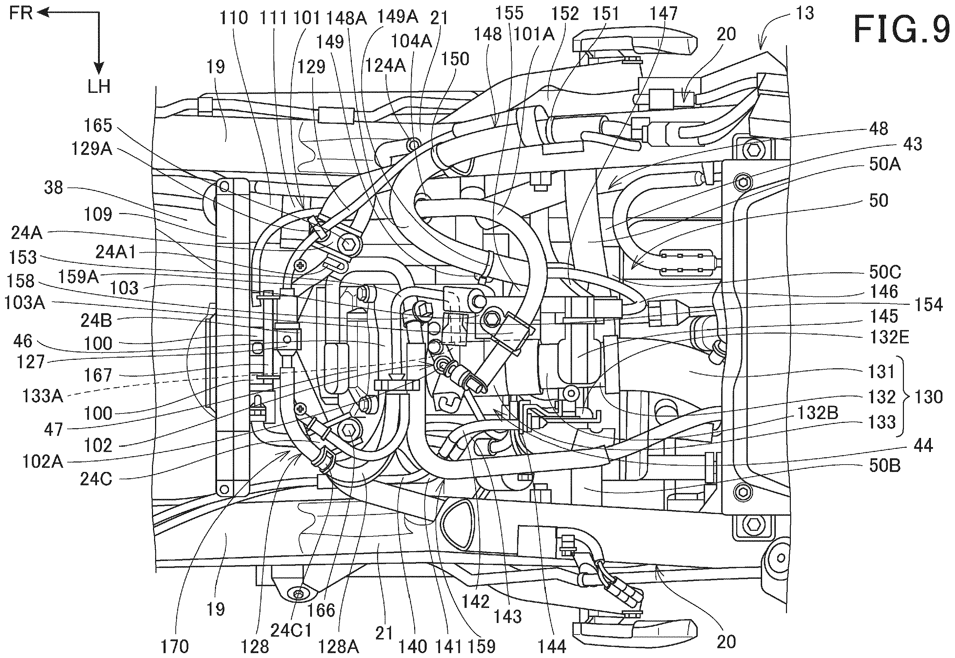

   FIG. 9 is a plan view of a front-side upper portion of the unit swing engine.
[FIG. 10]

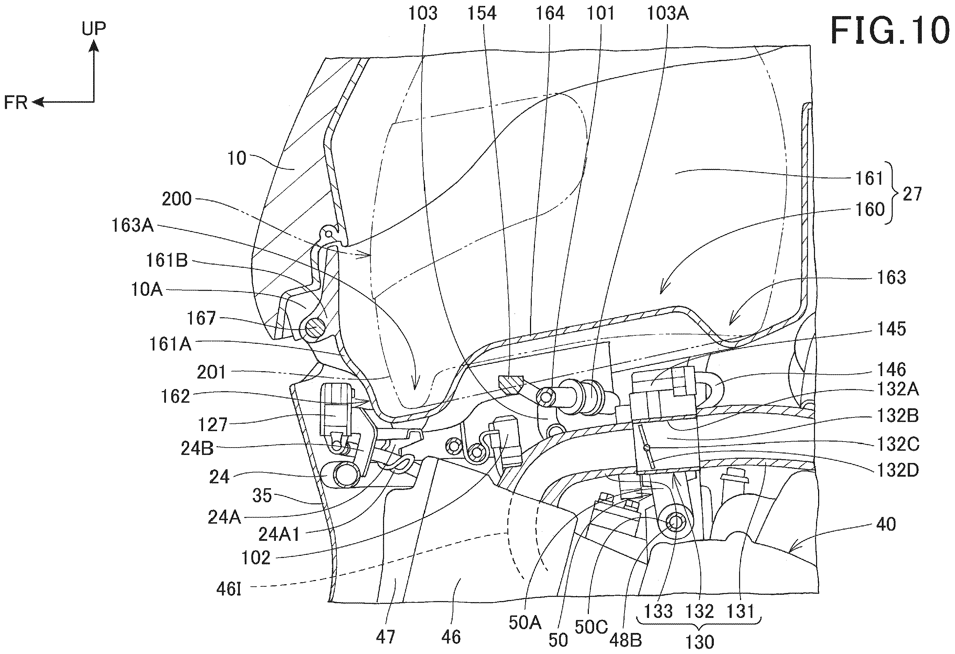

   FIG. 10 is an illustration of an upper-lower relation of an intake passage and an accommodation box.
[FIG. 11]

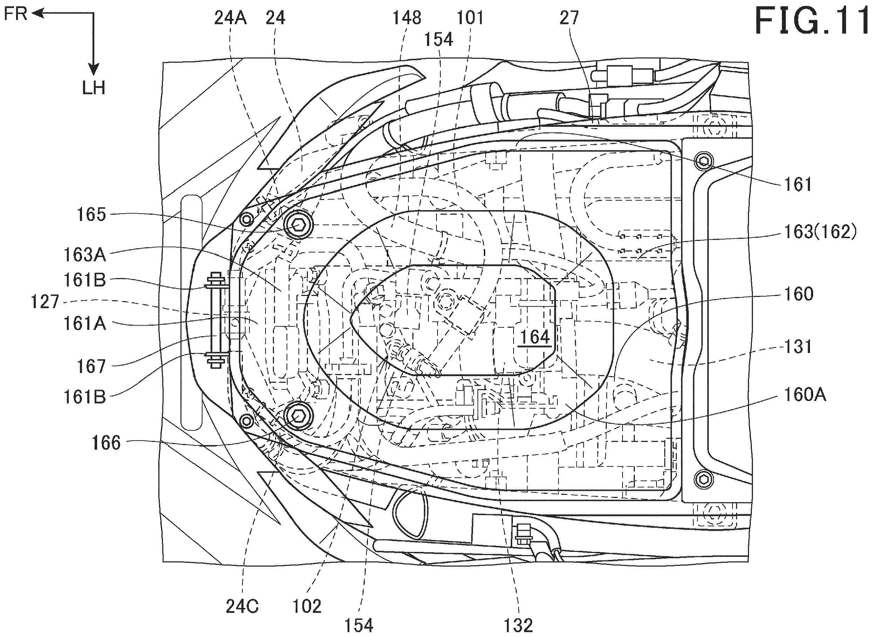

   FIG. 11 is an illustration of the position of a bottom portion of the accommodation box.

### [Description of Embodiment]

An embodiment of the present invention will be described below, referring to the drawings. Note in the description, the directions such as forward, rearward, leftward, rightward, upward and downward directions are the same as the directions with reference to a vehicle body, unless specified otherwise. In addition, reference symbol FR in the drawings denotes the front side of the vehicle body, reference symbol UP denotes the upper side of the vehicle body, reference symbol LH denotes the left side of the vehicle body, and reference symbol RH denotes the right side of the vehicle body.

FIG. 1 is a right side view of a motorcycle according to an embodiment of the present invention. Note in FIG. 1, of components provided in a left-right pair, only the right-side one is illustrated.

A motorcycle 1 is a scooter-type saddle riding vehicle having a low floor-type step floor (flat floor) 11 on which to put the feet of a rider seated on a seat 10. The motorcycle 1 has a front wheel 2 on the front side of a body frame (vehicle body) 12, and a rear wheel 3 as a driving wheel is shaft-supported on a unit swing engine (internal combustion engine; engine) 13 disposed at a rear portion of the vehicle.

The motorcycle 1 has a front fork 14 shaft-supported on a front end portion of the body frame 12, and the front wheel 2 is shaft-supported on a lower end portion of the front fork 14. A handlebar 15 for steering by the rider is attached to an upper end of the front fork 14.

The motorcycle 1 has a body cover 16 covering the vehicle body, such as the body frame 12.

The body frame 12 includes a head pipe 17 provided at a front end, a down frame 18 extending rearwardly downward from the head pipe 17, a pair of left and right lower frames 19, 19 extending substantially horizontally rearward from a lower end of the down frame 18, and a pair of left and right seat frames 20, 20 extending rearwardly upward from rear ends of the lower frames 19, 19.

The lower frames 19, 19 and the seat frames 20, 20 have pipe shapes extending in the longitudinal vehicle direction.

Each seat frame 20 includes a rising portion 21 extending rearwardly upward from a rear end of each lower frame 19, and a rear extension portion 22 extending from an upper end of the rising portion 21 to a rear end of the body frame 12. The rear extension portion 22 extends rearwardly upward at an inclination gentler than that of the rising portion 21.

The body frame 12 includes a cross member 23 interconnecting rear end portions of the lower frames 19, 19 in the transverse direction, an upper cross member (seat support stay) 24 interconnecting upper portions of the rising portions 21, 21 in the transverse direction, and a pair of left and right support frames 25, 25 extending rearward from the rising portions 21, 21.

In addition, the body frame 12 includes a pair of left and right engine brackets 26, 26 projecting rearward from the rising portions 21, 21 of the seat frames 20, 20.

The unit swing engine 13 is swingably supported on the engine brackets 26, 26 through a link mechanism 48.

The unit swing engine 13 is a unit swing power unit in which an engine main body 40 as a drive source and an arm section 41 supporting the rear wheel 3 are unitized together.

A rear suspension 29 is arranged between a rear end portion of the unit swing engine 13 and rear portions of the seat frames 20, 20.

The rear wheel 3 is shaft-supported by a rear wheel axle 3a at a rear end portion of the arm section 41.

An exhaust pipe 77 of the engine main body 40 has a front portion 77a extending downward from a front portion of the engine main body 40, passes from the other side (left side) in the transverse direction to one side (right side), and extends rearward to a lateral side of the rear wheel 3.

When the unit swing engine 13 is swung through the link mechanism 48, the engine main body 40 and the exhaust pipe 77 and the like are swung as one body.

An accommodation box 27 capable of accommodating an article such as a helmet is provided between the left and right seat frames 20, 20 on the upper side of the unit swing engine 13. The seat 10 is supported by an upper surface of the accommodation box 27, and covers an opening in the upper surface of the accommodation box 27.

A fuel tank 38 is disposed on the front side of the unit swing engine 13. The fuel tank 38 is disposed between the left and right lower frames 19, 19 on the front side of the cross member 23.

The body cover 16 includes an upper cover 30 covering the surroundings of the handlebar 15, a front cover 31 covering the head pipe 17 and the down frame 18 from the front side and the lateral sides, and a leg shield 32 mated to the front cover 31 from the rear side to cover the head pipe 17 and the down frame 18.

In addition, the body cover 16 includes: an under cover 33 covering the lower frames 19, 19 from the lower side; under side covers 33A, 33A covering the lower frames 19, 19 from lateral sides; a step floor 11 covering the lower frames 19, 19 from above; a pair of left and right side covers 34, 34 covering the seat frames 20, 20 and the accommodation box 27 from lateral sides under the seat 10; and a center lower cover (under-seat cover) 35 covering the accommodation box 27 and the unit swing engine 13 from the front side under the seat 10.

Besides, the motorcycle 1 has a front fender 36 covering the front wheel 2 from above.

A center stand 28 for parking the motorcycle 1 in an upright state is attached to a lower surface portion of a rear portion of the engine main body 40. The center stand 28, by being rotated around a center stand rotational axis, is put into a stored state or a parking state.

FIG. 2 is a sectional view of the unit swing engine 13.

The engine main body 40 provided at a front portion of the unit swing engine 13 includes a crankcase 43 accommodating a crankshaft 42 extending in the transverse direction, and a cylinder section 44 extending forward from the crankcase 43.

The cylinder section 44 includes a cylinder 45, a cylinder head 46 and a head cover 47 in this order from the crankcase 43 side.

The engine main body 40 is a horizontal engine in which a cylinder axis 44a of the cylinder section 44 extends substantially horizontally in the longitudinal vehicle direction. In detail, the cylinder section 44 extends substantially horizontally toward the front side of the vehicle slightly forwardly upward in side view of the vehicle.

The crankcase 43 includes a support wall 51 and a support wall 52 orthogonal to the crankshaft 42, and the crankshaft 42 is supported by the support wall 51 and the support wall 52 through bearing. A crank chamber 53 is formed between the support wall 51 and the support wall 52.

A piston 54 reciprocated within the cylinder 45 is connected to the crankshaft 42 in the crank chamber 53 through a connecting rod 55.

The crankcase 43 has a generator chamber 56 on one (right side) of the left and right sides of the crank chamber 53.

A generator 58 generating electric power by rotation of the crankshaft 42 is provided at one end of the crankshaft 42 which extends into the inside of the generator chamber 56. The generator 58 is rotated as one body with the crankshaft 42. A blower fan 59 is provided on an outside surface of the generator 58. The periphery of the blower fan 59 is covered by a fan cover 57.

A radiator 60 through which cooling water for the engine main body 40 passes is provided on an outer side of the blower fan 59. The radiator 60 is fixed to an outside surface portion of the generator chamber 56. The radiator 60 is covered by a radiator cover 61 provided with a vent hole 61a, from an outer side in regard of the transverse direction.

A water jacket 40a through which the cooling water passes is provided in a wall of the cylinder head 46. A water jacket 40b through which the cooling water passes is provided in a wall of the cylinder 45. The water jacket 40a and the water jacket 40b communicate with each other.

The cylinder head 46 is provided therein with a valve system 63 for driving an intake valve and an exhaust valve which are not depicted. The valve system 63 includes a camshaft 64 disposed in parallel to the crankshaft 42, and the intake valve and the exhaust valve, which are not depicted, driven by the camshaft 64. The head cover 47 covers the valve system 63.

The camshaft 64 is driven by the crankshaft 42 through a cam chain 65 which interconnects the camshaft 64 and the crankshaft 42.

The cylinder section 44 includes a cam chain chamber 66 through which the cam chain 65 passes. The cam chain chamber 66 is provided ranging the crankcase 43, the cylinder 45 and the cylinder head 46, and extends in an axial direction of the cylinder section 44. The cam chain chamber 66 is located between the crank chamber 53 and the generator chamber 56 in the transverse direction, and is provided on a side wall section 67R on one side (right side) of side wall sections 67R and 67L in the left-right direction (transverse direction) of the cylinder section 44. The side wall sections 67L and 67R include side wall sections (side surfaces) of the cylinder head 46.

An ignition plug 68 is provided on the cylinder head 46 on the side of the side wall section 67L on the other side (left side).

The crankcase 43 integrally includes a transmission case section 70 extending rearward from a side surface portion on the side opposite to the generator chamber 56 side. The transmission case section 70 extends from a part on a lateral side of the crank chamber 53 to a left side of the rear wheel 3.

The transmission case section 70 is formed in a case shape with an outside surface in regard of the transverse direction opening, and this opening portion is closed with a transmission case cover 71.

The transmission case cover 71 is fixed to the transmission case section 70, whereby the aforementioned arm section 41 is configured.

In addition, a sub-arm 72 extending rearward is fixed to a rear portion on one side (right side) in regard of the transverse direction of the crankcase 43.

The rear wheel axle 3a has both end portions supported by a rear end portion of the arm section 41 and a rear end portion of the sub-arm 72, and the rear wheel 3 is disposed between the arm section 41 and the sub-arm 72.

A belt-type continuously variable transmission 73, a centrifugal-type clutch mechanism 74 and a speed reduction mechanism 75 including a plurality of gears are provided inside the arm section 41, which is hollow.

A driving force of the crankshaft 42 is transmitted to the rear wheel 3 through the belt-type continuously variable transmission 73, the clutch mechanism 74 and the speed reduction mechanism 75.

The motorcycle 1 has a cooling structure for cooling the engine main body 40 with cooling water. The cooling structure includes: a water pump unit 81 for feeding cooling water; a radiator 60; a feed-side hose (radiator hose) 82 (see FIG. 5) through which the cooling water flowing from the engine main body 40 side to the radiator 60 passes; a return-side hose 83 (see FIG. 5) through which the cooling water returning from the radiator 60 to the engine main body 40 side passes; and a thermo actuator unit (not depicted) for changing over passages for the cooling water.

The water pump unit 81 is provided at the side wall section 67R on one side (right side) of the side wall sections 67R and 67L in the left-right direction (transverse direction) of the cylinder section 44. In addition, the radiator 60 is also provided on a lateral side on one side (right side) of the crankcase 43, in the left-right direction (transverse direction).

The water pump unit 81 includes an impeller 87 as a rotor, and a housing 88 for accommodating the impeller 87.

The impeller 87 includes a shaft section 87a connected to an end portion of the camshaft 64, and a vane section 87b provided at an outer periphery of the shaft section 87a. The shaft section 87a is disposed coaxially with the camshaft 64, and is rotated as one body with the camshaft 64. The vane section 87b is provided on an outside of the side wall section 67R of the cylinder head 46. In other words, the impeller 87 is driven by the crankshaft 42 through the camshaft 64.

FIG. 3 is an enlarged view of the part of the step floor 11 of FIG. 1. FIG. 4 is a figure obtained by omitting the under side cover 33A from FIG. 3.

The fuel tank 38 is disposed on the front side of the unit swing engine 13. The fuel tank 38 is disposed between the left and right lower frames 19, 19 on the front side of the cross member 23. The fuel tank 38 is covered on the upper, lower, left and right sides thereof by the step floor 11, the under side covers 33A, 33A and the under cover 33. The motorcycle 1 of the present embodiment has the fuel tank 38 under the step floor 11, and is a so-called scooter-type vehicle with an underfloor tank (scooter-type saddle riding vehicle).

FIG. 5 is a right side view of the fuel tank 38, and FIG. 6 is a left side view of the same.

The fuel tank 38 includes an upper half 38A and a lower half 38B which are in a half-container shape. The upper half 38A and the lower half 38B are formed respectively with flange-shaped open ends 38A1 and 38B1. The open ends 38A1 and 38B1 are joined together, to constitute the fuel tank 38. Joint portions of the open ends 38A1 and 38B1 configure a division surface 38C. The division surface 38C is inclined rearwardly downward more on the rear side. The fuel tank 38 has an upper surface 38A2 inclined rearwardly downward more on the rear side. An uppermost end 38A3 is formed at a front portion of the fuel tank 38. Here, as illustrated in FIG. 4, the step floor 11 covering the upper side of the fuel tank 38 is inclined rearwardly upward more on the rear side. At a rear portion of the fuel tank 38, a space 39 is generated between the fuel tank 38 and the step floor 11.

A fuel supply section 90 provided with a fuel filler port 93 is provided at a front portion of the fuel tank 38.

The fuel supply section 90 includes a rubber tube 91 communicating with the inside of the fuel tank 38. The rubber tube 91 extends toward a front upper side. A filler neck 92 is connected to an upper end portion of the rubber tube 91. The fuel filler port 93 is formed at an upper portion of the filler neck 92. The fuel filler port 93 is closed with a fuel cap 94. A horn-shaped guide section 95 capable of guiding a fueling gun (not depicted) to the fuel filler port 93 is provided at an upper portion of the filler neck 92. The guide section 95 surrounds the fuel filler port 93.

The rubber tube 91, the filler neck 92, the fuel filler port 93, the fuel cap 94 and the guide section 95 constitute the fuel supply section 90.

The fuel supply section 90 is supported by a fuel supply section holder 96. As depicted in FIG. 6, the fuel supply section holder 96 is fixed to the upper half 38A of the fuel tank 38 through a stay 97.

As illustrated in FIGS. 3 and 4, the fuel supply section 90 is covered by the leg shield 32. The leg shield 32 is provided with an opening 32a corresponding to the position of the fuel filler port 93. The opening 32a is openably closed with a lid which is not depicted. By opening the lid, an access to the fuel filler port 93 is permitted, and a fuel can be supplied into the fuel tank 38.

FIG. 7 is a plan view of the fuel tank 38. FIG. 8 is a sectional view taken along line VIII-VIII of FIG. 4. In FIGS. 7 and 8, illustration of the step floor 11 and the like is appropriately omitted.

In plan view, a rear portion of the fuel tank 38 and the cylinder section 44 of the unit swing engine 13 overlap with each other. A fuel pump 100 is disposed at a rear portion of the fuel tank 38, on the front side of the cylinder section 44. As depicted in FIG. 8, the fuel pump 100 is attached to an attachment hole 38A4 of the upper half 38A. The attachment hole 38A4 is formed in a substantially central portion in regard of the transverse direction of the upper half 38A.

A fuel hose 101 is connected to a right portion of the fuel pump 100. The fuel hose 101 is laid from the right side of the fuel pump 100 toward the rear side. The fuel hose 101 is locked to a ring-shaped lock section 21A provided in the rising portion 21 on the right side, and, on the upper side, is fixed to a stay section 104 of the rising portion 21 through a clamp 104A. The fuel hose 101 fixed to the stay section 104 is laid on the unit swing engine 13 side, and is connected to the cylinder section 44. The fuel pump 100 supplies the cylinder section 44 with the fuel contained in the fuel tank 38, through the fuel hose 101. Since the fuel pump 100 is disposed at a rear portion near the cylinder section 44 of the engine main body 40, the length of the fuel hose 101 can be shortened.

A cable 108 for electric control is connected to the left side of the fuel pump 100.

A canister 110 is disposed on the right side of the fuel pump 100. The canister 110 is disposed in a recess 38A5 formed in a rear portion of the upper half 38A. The recess 38A5 is formed by downward recessing of the upper surface 38A2 of the upper half 38A approximately to the height of the division surface 38C.

The canister 110 is formed in a cylindrical shape. An adsorbing member for adsorbing an evaporated fuel is accommodated in the inside of the canister 110. As the adsorbing member, for example, activated carbon can be used. As depicted in FIG. 5, the canister 110 is disposed such that an axial direction 110A as a longitudinal direction thereof is along the longitudinal vehicle direction. The canister 110 is fixed to the upper half 38A through a cylindrical holder 111.

The aforementioned space 39 (see FIG. 4), which is broader on the rear side, is formed between the step floor 11 and the fuel tank 38. The fuel pump 100 and the canister 110 are disposed at a rear portion of the fuel tank 38, so that it is easy to dispose the fuel pump 100 and the canister 110. In addition, as illustrated in FIG. 5, a rear end 110B of the canister 110 is located on the rear side relative to a rear end 38D of the fuel tank 38, and the canister 110 can be disposed utilizing a space on the rear side relative to the fuel tank 38. Especially, the unit swing engine 13 of the present embodiment is of a so-called upper link type, in which the link mechanism 48 is provided at an upper portion. Here, in a so-called lower link type, a link mechanism is provide at a lower portion of the engine main body 40. Therefore, between the fuel tank 38 under the floor and the engine main body 40, the link is disposed and, hence, a space is hardly generated there. On the other hand, in the present embodiment of the upper link type, the canister 110 can be efficiently disposed while utilizing the space generated on the rear side relative to the fuel tank 38.

A charge hose 122, a first purge hose 123, a fresh air introduction hose 124 and a drain hose 125 the insides of which communicate with one another are connected to the front and rear sides of the canister 110. Each of the hoses 122 to 125 extends in the longitudinal vehicle direction.

The canister 110 overlaps with the fuel tank 38 in side view. In addition, the canister 110 is disposed below the uppermost end 38A3 of the fuel tank 38. Here, since each of the hoses 122 to 125 extends in the longitudinal vehicle direction, the canister 110 can be disposed in the vicinity of the fuel tank 38 in a compact fashion, and the length of the charge hose 122 can be shortened. Besides, the routing properties of the charge hose 122 can be enhanced.

In addition, the canister 110 is disposed between an imaginary line 38A6 passing through the uppermost end 38A3 of the fuel tank 38 and the division surface 38C of the fuel tank 38, in regard of the vertical direction. Since the division surface 38C of the fuel tank 38 is inclined rearwardly downward more on the rear side, it is easy to dispose the canister 110 in the vicinity of the fuel tank 38.

Besides, in plan view as depicted in FIG. 7, the canister 110 is located on an inner side in the transverse direction than the lower frame 19 of the body frame 12. In addition, in side view as depicted in FIG. 4, the canister 110 overlaps with the lower frame 19 of the body frame 12. Therefore, the canister 110 is protected by the lower frame 19.

As depicted in FIGS. 7 and 8, a cross plate 109 extending in the transverse direction is disposed on the upper side of the fuel pump 100. The cross plate 109 is arranged between the left and right lower frames 19, 19. The step floor 11 is supported by the cross plate 109.

As depicted in FIG. 7, a gas-liquid separator 120 for separating a gas-liquid mixed fuel into gas and liquid is attached to a front right side of the upper half 38A. The gas-liquid separator 120 releases only the gas to the exterior. A tank breather hose 121 for releasing air from the inside of the fuel tank 38 is connected to the gas-liquid separator 120.

The tank breather hose 121 is laid in an arcuate shape from the right side to the left side along the rear side of the fuel supply section 90. As depicted in FIG. 6, the tank breather hose 121 extends upward on the left side of the fuel supply section 90. An upper end 121A of the tank breather hose 121 is connected to the filler neck 92, and communicates with the inside of the filler neck 92. The tank breather hose 121 is supported by a bent bar-shaped support section 96A possessed by the fuel supply section holder 96.

When the fueling gun (not depicted) is inserted into the fuel filler port 93 and the fuel is supplied into the fuel tank 38, the gas in the fuel tank 38 is led through the tank breather hose 121 to the filler neck 92, and is discharged to the exterior.

A branch section 121B is provided at an upper end portion of the tank breather hose 121. The charge hose 122 for sucking the evaporated fuel through the tank breather hose 121 is connected to the branch section 121B. The charge hose 122 is laid to go around a rear portion of the fuel supply section 90 from the left side to the right side, and extends downward. As depicted in FIG. 5, the charge hose 122 is laid toward a right end of the fuel tank 38, on the right side of the fuel supply section 90. The charge hose 122 is supported by bend bar-shaped support sections 96B and 96C possessed by the fuel supply section holder 96.

In FIGS. 4, 5 and 7, the charge hose 122 laid at a right end portion of the fuel tank 38 is laid along the division surface 38C of the fuel tank 38 from a front portion toward the rear side, and is connected to a charge joint (canister charge joint) 110C of the canister 110 on the rear side. Since the charge hose 122 is routed along the division surface 38C of the fuel tank 38 that is formed inclinedly, the routing property is enhanced. Here, the charge joint (a joint part between the canister 110 and the charge hose 122) 110C is provided to be located on the lowermost side of the charge hose 122. Therefore, the charge hose 122 connected to the charge joint 110C is inclined such as to be located on the lower side in going toward the canister 110. This configuration makes it possible to prevent valley piping of the charge hose 122, namely, a state of piping having a part protuberant to the lower side, and to exclude a part where the fuel or the like would stagnate in the charge hose 122. In addition, it becomes unnecessary to newly provide a drain hose for draining the fuel, and, therefore, a reduction in cost can be realized.

The first purge hose 123 extending from a front left portion of the canister 110 extends forward, is then bent in a U shape to the right side, and is laid toward the rear side. The first purge hose 123 laid rearward is laid toward a front upper side on the right side of the cylinder section 44 of the engine main body 40, and is connected to a purge control valve 127 on the front side of the accommodation box 27. As denoted in FIG. 8, a second purge hose 128 is connected to the purge control valve 127. The second purge hose 128 is connected to the cylinder section 44.

As illustrated in FIG. 8, the fresh air introduction hose 124 extending from a rear upper portion of the canister 110 extends upward along the rising portion 21. An upper end 124A of the fresh air introduction hose 124 is opening. Fresh air is taken into the canister 110 through the fresh air introduction hose 124.

The drain hose 125 extending from a rear lower portion of the canister 110 extends rearward, is then bent in a U shape downward, and extends forward. A lower end 125A of the drain hose 125 is opening, so that an excess fuel liquefied in the inside of the canister 110 can be discharged.

By an intake negative pressure of the engine main body 40, the evaporated fuel is made to pass through the tank breather hose 121 and the charge hose 122, and the evaporated fuel is taken into the canister 110. In addition, the evaporated fuel adsorbed on the canister 110 is supplied through the first purge hose 123 and the second purge hose 128 to the cylinder section 44 of the engine main body 40.

FIG. 9 is a plan view of a front upper portion of the unit swing engine 13.

The unit swing engine 13 is supported on the body frame 12 by the link mechanism 48.

In FIGS. 4 and 5, the link mechanism 48 includes: a pair of left and right body-side swing shafts 48A, 48A connected to the engine brackets 26, 26 of the seat frames 20, 20; an engine-side swing shaft 48B connected to an upper portion of the crankcase 43; and a link member 50 interconnecting the body-side swing shafts 48A, 48A and the engine-side swing shaft 48B. In other words, the engine-side swing shaft 48B is provided at an upper portion of the crankcase 43 located above the cylinder axis 44a of the cylinder section 44, the engine-side swing shaft 48B and the body-side swing shafts 48A, 48A are connected through the link member 50, and the unit swing engine 13 is swingably supported by the body frame 12.

In FIG. 9, the link member 50 is generally in the shape of inverted n. Specifically, the link member 50 includes left and right bent sections 50A and 50B bent downward in going toward the inner sides in the transverse direction, and a pipe section 50C supported by lower ends of the bent sections 50A and 50B and extending in the transverse direction. Upper end portions of the bent sections 50A and 50B are rotatably supported by the engine brackets 26, 26. In addition, a front end upper portion of the crankcase 43 of the engine main body 40 is rotatably supported on the pipe section 50C. The link member 50 of the link mechanism 48 is rotated in the longitudinal vehicle direction, around the body-side swing shafts 48A, 48A. The unit swing engine 13 is rotated in the vertical direction, around the engine-side swing shaft 48B. It can be said that the unit swing engine 13 is rotated and swung around two points (the body-side swing shafts 48A, 48A and the engine-side swing shaft 48B) by the link member 50.

On the upper side of the unit swing engine 13, an intake passage 130 extending in the longitudinal vehicle direction is disposed at a substantially central portion in the transverse direction. The fuel hose 101, a main harness 152 and a sub-harness 148 for electric control or the like are laid on the right side ( one side in the transverse direction) in relation to the intake passage 130. Further, the second purge hose 128, throttle cables 140 and 141, a crankcase breather hose 159, and the like are disposed on the left side (other side in the transverse direction) in relation to the intake passage 130. In other words, hose-shaped members such as the fuel hose 101, the second purge hose 128, and the sub-harness 148 are concentratedly laid on the rear side relative to the fuel pump 100 of the fuel tank 38 and on the front side of the link mechanism 48 in plan view, at an upper portion of the unit swing engine 13.

The intake passage 130 is provided with a connecting tube 131. The connecting tube 131 extends from an air cleaner (not depicted) toward a right front side, and reaches a substantially central portion in the transverse direction, at which it is bent to the front side. A throttle body 132 is connected to a front end of the connecting tube 131. An intake pipe 133 is connected to a front side of the throttle body 132. The intake pipe 133 is connected to an intake port 461 (see FIG. 10) of the cylinder head 46. The connecting tube 131, the throttle body 132 and the intake pipe 133 constitute the intake passage 130 of the engine main body 40.

FIG. 10 is an illustration of a vertical relation between the intake passage 130 and the accommodation box 27.

The throttle body 132 is disposed in a space surrounded by the bent sections 50A and 50B and the pipe section 50C of the link member 50, between the engine main body 40 and the accommodation box 27. The throttle body 132 overlaps with the link member 50 in the longitudinal vehicle direction, in side view.

The throttle body 132 includes a body main body 132B having an intake passage 132A. A valve shaft 132C is rotatably supported on the body main body 132B in such a manner as to cross the intake passage 132A. A butterfly-type throttle valve 132D for opening and closing the intake passage 132A is fixed to the valve shaft 132C. In addition, as depicted in FIG. 9, a throttle drum 132E as a pulley is fixed to the valve shaft 132C, on the outside of the body main body 132B.

The throttle drum 132E is disposed on the left side of the body main body 132B. An opening-side throttle cable 140 and a closing-side throttle cable 141 are connected to the throttle drum 132E. When pulled, the opening-side throttle cable 140 rotates the throttle drum 132E in such a direction that the throttle valve 132D opens the intake passage 132A. In addition, when pulled, the closing-side throttle cable 141 rotates the throttle drum 132E in such a direction that the throttle valve 132D closes the intake passage 132A. The throttle cables 140 and 141 are passed through support tubes 142 and 143, respectively. The support tubes 142 and 143 are fixed to a cable support stay 144.

The support tubes 142 and 143 are bent downward in going forward. The throttle cables 140 and 141 extend downward from lower ends of the support tubes 142 and 143. The throttle cables 140 and 141 are laid toward a lower front side between the seat frame 20 on the left side and the cylinder section 44, and laid toward the front side along the lower frame 19 on the left side. The throttle cables 140 and 141 are laid in a steering system, and are connected to an operation element provided on the handlebar 15.

A throttle sensor 145 is attached to the body main body 132B of the throttle body 132. The throttle sensor 145 detects a rotational angle of the valve shaft 132C (see FIG. 10), thereby to detect an opening degree of the throttle valve 132D (see FIG. 10). The throttle sensor 145 is connected to an electronic control unit (ECU) (not depicted) through a sensor cable 146.

The sensor cable 146 extends rearward from the throttle sensor 145, is then bent in a U shape, and extends forward. The sensor cable 146 extending forward is put together with other cables 147, 155 and the like, to constitute the sub-harness 148.

The sub-harness 148 is bent in a U shape on the right side of the cylinder section 44, and is laid toward the rear side. The sub-harness 148 laid rearward extends along the seat frame 20 on the right side, and is connected to the electronic control unit (not depicted). The sub-harness 148 is connected to component parts disposed in the intake passage 130, such as an injector 102 and the throttle sensor 145.

The sub-harness 148 is supported on a stay 149, which is fixed to the cylinder section 44, through a clamp 149A. In addition, the sub-harness 148 is supported on the seat frame 20 on the right side by clamps 150 and 151.

That bent part of the sub-harness 148 which is located between the stay 149 on the unit swing engine 13 side and the clamp 150 on the body frame 12 side constitutes a bending portion 148A.

The main harness 152 is laid on the right side of the body frame 12. The main harness 152 extends from the electronic control unit (not depicted) and a battery (not depicted) toward a front lower side along the seat frame 20 on the right side, and extends forward along the lower frame 19 on the right side. The main harness 152 is connected to a head lamp (not depicted), meters (not depicted) and the like provided in the steering system.

The injector 102 for injecting the fuel is disposed in the intake pipe 133. The injector 102 is configured in a shaft-like shape and disposed such as to be inserted into the intake pipe 133 from a left upper side. The injector 102 has a lower end portion, which injects the fuel, disposed in the intake pipe 133, and the fuel hose 101 is connected to an upper end portion 102A thereof. The fuel hose 101 extends from the injector 102 toward a right rear side to pass beyond the upper side of the intake passage 130, at which it is bent in a U shape toward a front lower side.

The fuel hose 101 is supported on a stay section 103 fixed to the right side of the intake pipe 133, through a clamp 103A. In addition, the fuel hose 101 is fixed to the stay section 104 (see FIG. 8) provided on the rising portion 21 on the left side, through the clamp 104A. That bent part of the fuel hose 101 which is located between the stay section 103 on the unit swing engine 13 side and the stay section 104 on the body frame 12 side constitutes a bending portion 101A.

Of the fuel hose 101 in the present embodiment, one end side is laid to pass under the sub-harness 148, whereas another end side is laid to pass over the sub-harness 148. In other words, the bending portion 148A of the sub-harness 148 and the bending portion 101A of the fuel hose 101 intersect each other in the manner of going around each other.

Since the unit swing engine 13 swings, the relative positions of the unit swing engine 13 and the body frame 12 vary. Therefore, hose-shaped members such as the fuel hose (hose-shaped member) 101 and the sub-harness (hose-shaped member) 148 which are supported on both the unit swing engine 13 and the body frame 12 are influenced by variations in the support positions. Since the fuel hose 101 and the sub-harness 148 are provided with the bending portions 101A and 148A, the bending shapes of the bending portions 101A and 148A vary, whereby the positional variations at the time of swinging can be absorbed.

In the present embodiment, the curved bending portions 101A and 148A intersect each other in such a manner that one goes around the other. Therefore, in a dead space of the bending portions 101A, 148A on one side, namely, in a space on the inner periphery sides of the curved shapes of the hose-shaped members 101, 148 on one side, the bending portions 148A, 101A of the hose-shaped members 148, 101 on the other side can be disposed. Even in the case where the bending portion 101A of the fuel hose 101 and the bending portion 148A of the sub-harness 148 are concentratedly disposed on the front side of the link member 50 and on the rear side of the fuel pump 100, the bending portion 101A of the fuel hose 101 and the bending portion 148A of the sub-harness 148 can be provided in a compact fashion in the vehicle by making them intersect each other.

Especially, the fuel hose 101 and the sub-harness 148 are both extended in the longitudinal vehicle direction. The fuel hose 101 is laid to extend rearward and to bypass the cylinder head 46 to the right side (lateral side) of the cylinder head 46. The sub-harness 148 extends rearward. Therefore, routing properties of the fuel hose 101 and the sub-harness 148 are good.

In addition, the bending portions 101A and 148A of the fuel hose 101 and the sub-harness 148 are located on the opposite side of the intake passage 130 from the throttle drum 132E and the throttle cables 140 and 141, in the transverse direction. The fuel hose 101, the sub-harness 148 and the throttle cables 140 and 141 can be efficiently laid in a space surrounding the cylinder section 44.

A metallic purge pipe 153 is connected to the intake pipe 133. The purge pipe 153 is disposed on the opposite side of the intake pipe 133 from the injector 102, or on the right side of the intake pipe 133. The purge pipe 153 extends rightward from a joint section 133A of the intake pipe 133, and is bent in a U shape to the front side. The second purge hose 128 is connected to the purge pipe 153. The second purge hose 128 is bent in a U shape to the front side. The second purge hose 128 is supported by a support section 24C1 of the upper cross member 24.

Therefore, the joint section 133A of the purge pipe 153 and the intake pipe 133 is located on the right side, which is the opposite side of the intake passage 130 from the aforementioned throttle cables 140 and 141. The second purge hose 128 and the purge pipe 153 can be connected to the intake passage 130 of the engine main body 40 without interference with the throttle cables 140 and 141.

The second purge hose 128 ranges to both a side stay section 24C on the body frame 12 side and the purge pipe 153 on the unit swing engine 13 side. The part bent in a U shape of the second purge hose 128 which is located between the side stay section 24C and the purge pipe 153 constitutes a bending portion 128A. By the bending portion 128A, positional variations at the time of swinging of the unit swing engine 13 can be absorbed.

Here, the bending portion 128A of the second purge hose 128 is disposed on the front side of the link member 50 and on the rear side of the fuel pump 100. In addition, the bending portion 128A of the second purge hose 128 is located on the left side, which is the opposite side of the intake passage 130 from the fuel hose 101, in regard of the transverse direction. Interference between the bending portion 101A of the fuel hose 101 and the bending portion 128A of the second purge hose 128 can be avoided.

An intake pressure sensor 154 is disposed at an upper portion of the purge pipe 153. The intake pressure sensor 154 detects the pressure inside the intake pipe 133. A detection signal of the intake pressure sensor 154 is sent to the electronic control unit through the sub-harness 148.

A crankcase breather hose 159 is connected to the head cover 47 of the engine main body 40. The crankcase breather hose 159 communicates with the inside of the cylinder section 44, and is connected to a cleaner case (not depicted) on the rear side. The crankcase breather hose 159 connected to the head cover 47 is laid toward the right side along the head cover 47, extends on the right side (side portion) of the cylinder head 46 toward a rear upper side, and is thereafter laid over the cylinder head 46 toward the left side. The crankcase breather hose 159 is fixed to the cylinder head 46 through a clamp 158. That bent part of the crankcase breather hose 159 which is located between the fixed part of the head cover 47 and the clamp 158 constitutes a bent portion 159A.

The crankcase breather hose 159 is laid on the left side relative to the throttle cables 140 and 141 by passing between the bending portion 128A of the second purge hose 128 and the throttle cables 140 and 141, on the left side of the cylinder head 46. Besides, the crankcase breather hose 159 extends rearward, to be connected to the air cleaner (not depicted).

A blow-by gas generated in the engine main body 40 by combustion flows to the air cleaner (not depicted) through the crankcase breather hose 159. After flowing to the air cleaner (not depicted), the blow-by gas returns through the connecting tube 131, the throttle body 132 and the intake pipe 133 to the cylinder head 46, and is combusted.

Since the crankcase breather hose 159 has the bent portion 159A on the side near the cylinder section 44, a liquid fuel hardly flows rearward from the engine main body 40, and the liquid fuel can be prevented from flowing into the air cleaner.

FIG. 11 is an illustration of the position of a bottom portion 160 of the accommodation box 27.

The accommodation box 27 is disposed on the upper side of the unit swing engine 13. The accommodation box 27 is a container opening on the upper side. The accommodation box 27 includes the bottom portion 160 having a parabola shape projected on the front side in plan view, and a rising wall-shaped peripheral wall 161 provided in the periphery of the bottom portion 160.

The accommodation box 27 is supported by the body frame 12. A front portion of the accommodation box 27 is fixed to the upper cross member 24. As depicted in FIGS. 8 and 9, the upper cross member 24 is a pipe-shaped frame member of which a central portion in the transverse direction is curved to be projected to the front side, and interconnects upper portions of the rising portions 21, 21 of the body frame 12. The upper cross member 24 is located on the rear side of the fuel pump 100 in plan view. The upper cross member 24 includes a pair of side stay sections 24A and 24C in the transverse direction. A front portion 163A of a recess 163 in the accommodation box 27 is fixed to the side stay sections 24A and 24C by fastening members 165 and 166.

In FIGS. 10 and 11, the bottom portion 160 of the accommodation box 27 is formed with a downward projecting portion 162 projecting downward. The downward projecting portion 162 is formed in an annular shape along the peripheral wall 161. The plate thickness of the accommodation box 27 is substantially constant, and the recess 163 is formed in an annular shape correspondingly to the downward projecting portion 162. For example, a full-face helmet 200 can be accommodated in the accommodation box 27. The full-face helmet 200 can be accommodated in the accommodation box 27, with its jaw portion 201 set at the front portion 163A of the recess 163.

A part surrounded by the downward projecting portion 162 forms a raised bottom portion (recess) 164 relatively recessed upward. Component parts disposed in the intake passage 130 overlap with the range of the raised bottom portion 164 in plan view. Specifically, the component parts of the fuel supply device, namely, the injector 102, the intake pressure sensor 154, the throttle body 132 and the like overlap with the range of the raised bottom portion 164. The injector 102 and the like can enter into a space on the lower side of the raised bottom portion 164.

The accommodation box 27 is supported on the body frame 12, and, on the other hand, the injector 102, the intake pressure sensor 154 and the throttle body 132 are supported on the unit swing engine 13. Therefore, at the time of swinging of the unit swing engine 13, the distance between the accommodation box 27 on the body frame 12 side and the injector 102 and the like on the unit swing engine 13 side is decreased and increased. In the present embodiment, the injector 102 and the like can enter into the space on the lower side of the raised bottom portion 164, so that contact between the accommodation box 27 and the injector 102 or the like is avoided.

As depicted in FIG. 10, a front wall 161A of the accommodation box 27 extends upward from a front portion of the downward projecting portion 162. The front wall 161A is inclined such as to be located closer to the front side in going upward. The front wall 161A is provided at an upper portion thereof with a pair of left and right shaft support sections 161B, 161B projecting forward. A hinge shaft 167 extending in the transverse direction is supported on the shaft support sections 161B, 161B. A front end portion of a bottom plate 10A of the seat 10 is supported on the hinge shaft 167. The seat 10 is supported to be rotatable around the hinge shaft 167. The seat 10 is supported to be rotatable between a normal position in which it closes an opening on the upper side of the accommodation box 27 and the rider can be seated thereon and an open position in which it opens the opening of the accommodation box 27 to permit an access to the inside of the accommodation box 27.

A purge control valve 127 is disposed on the front side of the downward projecting portion 162. The purge control valve 127 is surrounded by the front wall 161A of the downward projecting portion 162 and a center lower cover 35, under the hinge shaft 167. The purge control valve 127 is fixed to a center stay section 24B provided at a central portion in the transverse direction of the upper cross member 24. Therefore, the purge control valve 127 can be disposed in a compact fashion while utilizing a space between the accommodation box 27 and the center lower cover 35. Especially, the purge control valve 127 is disposed on the front side of the downward projecting portion 162, and, therefore, can be disposed through effective utilization of the space on the front side of the downward projecting portion 162.

Since the purge control valve 127 is disposed at such a position as not to overlap with the accommodation box 27 in side view, a reduction in the capacity of the accommodation box 27 is restrained. In addition, since the purge control valve 127 is located under and overlaps with the accommodation box 27 in plan view, the purge control valve 127 can be protected by the accommodation box 27. Besides, since the hinge shaft 167 is located at a front end of the accommodation box 27, the purge control valve 127 can be difficult to be visually recognized from above, even when the seat 10 is opened and closed.

The purge control valve 127 is a solenoid valve which is electrically controllable. As depicted in FIGS. 8 and 9, a cable 129 for electric control is connected to an upper portion of the purge control valve 127. The cable 129 is supported on the side stay section 24A on the right side through a clamp 129A. The cable 129 is laid toward the right side along the upper cross member 24, and is fixed to the seat frame 20 by the clamps 150 and 151 together with the sub-harness 148. The cable 129 is connected to the electronic control unit (not depicted). By control by the electronic control unit, the purge control valve 127 is opened and closed, whereby the supply of the evaporated fuel fed to the intake pipe 133 is controlled. The purge control valve 127 is fixed to the upper cross member 24, and is located above the canister 110. Therefore, the fuel liquefied at the canister 110 is liable to collect in the first purge hose 123, whereby the liquefied fuel can be prevented from flowing excessively into the engine main body 40 when the purge control valve 127 is opened.

The upper cross member 24 is formed with a ring-shaped support section 24A1, at the side stay section 24A on the right side. The first purge hose 123 is supported by the support section 24A1. The first purge hose 123 laid toward the upper side from the canister 110 is laid along the upper cross member 24 to the purge control valve 127.

In addition, the side stay section 24C on the left side is formed with a ring-shaped support section 24C1. The second purge hose 128 is supported by the support section 24C1. The second purge hose 128 is laid along a left portion of the upper cross member 24 from the purge control valve 127.

The first purge hose 123 extending from the canister 110 on the right side and the second purge hose 128 are laid along the upper cross member 24 from the right side (one side) toward the left side (the other side). The laying properties of the first purge hose 123 and the second purge hose 128 can be enhanced. In addition, since the purge control valve 127 is disposed in the vicinity of the engine main body 40, the lengths of the second purge hose 128 interconnecting the purge control valve 127 and the cylinder section 44 of the engine main body 40 and of the purge pipe 153 can be shortened.

The first purge hose 123, the purge control valve 127, the second purge hose 128 and the purge pipe 153 constitute a purge passage 170 between the canister 110 and the intake pipe 133.

As described above, according to the present embodiment to which the present invention is applied, in the scooter-type motorcycle 1 having the accommodation box 27 disposed on an upper side of the unit swing engine 13, the purge control valve 127 is disposed on the front side of the accommodation box 27, supported by the upper cross member 24, and disposed on the rear side of the center lower cover 35. Therefore, with the purge control valve 127 supported by the upper cross member 24 on the front side of the accommodation box 27, the purge control valve 127 can be disposed compactly. In addition, since the purge control valve 127 can be disposed in the vicinity of the unit swing engine 13, the length of the second purge hose 128 can be shortened.

In the present embodiment, the scooter-type motorcycle 1 with the underfloor tank has a configuration in which the fuel tank 38 is disposed on the front side of the unit swing engine 13 and the step floor 11 is provided on an upper side of the fuel tank 38, the purge control valve 127 is disposed above the canister 110, and the purge control valve 127 is disposed at a position not overlapping with the accommodation box 27 in side view. Therefore, since the purge control valve 127 is disposed above the canister 110, the liquefied fuel can be restrained from excessively flowing into the engine main body 40 even when the purge control valve 127 is opened. Besides, with the purge control valve 127 disposed at a position not overlapping with the accommodation box 27 in side view, the capacity of the accommodation box 27 can be restrained from being reduced.

In addition, in the present embodiment, the accommodation box 27 is disposed on an upper side of the purge control valve 127 in plan view. Therefore, it can be ensured that the purge control valve 127 is not visually recognized even when the seat 10 is opened and closed. Besides, the purge control valve 127 can be protected by the accommodation box 27.

In addition, in the present embodiment, the canister 110 is disposed on the right side (one side) from the vehicle width directionally vehicle center, and the first purge hose 123 and the second purge hose 128 are routed from the right side to the left side (other side) along the upper cross member 24. Therefore, the routing properties of the first purge hose 123 and the second purge hose 128 can be improved.

Besides, in the present embodiment, the downward projecting portion 162 projecting downward from a front portion of the accommodation box 27 is provided, and the purge control valve 127 is disposed on the front side of the downward projecting portion 162. Therefore, the purge control valve 127 can be disposed in a state in which the capacity of the accommodation box 27 is enlarged.

In addition, in the present embodiment, the raised bottom section 164 recessed toward the upper side is provided on the vehicle rear side of a front portion of the accommodation box 27 in plan view. Therefore, the intake pipe 133 and the injector 102 disposed in the intake pipe 133 can be easily disposed, without interference with the accommodation box 27, owing to the raised bottom section 164.

Besides, in the present embodiment, the joint section 133A connecting the purge pipe 153 extending from the second purge hose 128 and the intake pipe 133 is present on the opposite side of the intake passage 130 from the throttle cables 140 and 141 in the vehicle width direction. Therefore, the second purge hose 128 can be connected to the intake passage 130 of the unit swing engine 13, without interference with the throttle cables 140 and 141.

In addition, in the present embodiment, the bending portion 128A of the second purge hose 128 is provided on the opposite side of the intake passage 130 from the fuel hose 101 in the vehicle width direction. Therefore, the bending portion 101A of the fuel hose 101 and the bending portion 128A of the second purge hose 128 can be restrained from interfering with each other.

Besides, in the present embodiment, the fuel tank 38 is disposed on the front side of the unit swing engine 13, the lengthwise direction of the canister 110 is disposed to be oriented in the longitudinal vehicle direction, the hoses 122, 123, 124, and 125 extend in the longitudinal vehicle direction of the canister 110, and the canister 110 is disposed at a position overlapping with the fuel tank 38 in side view and is disposed below the uppermost end 38A3 of the fuel tank 38. Therefore, the canister 110 can be compactly disposed in the vicinity of the fuel tank 38, the hoses 122 to 125 connected to the canister 110 can be shortened, and the routing properties of the hoses 122 to 125 connected to the canister 110 can be improved.

Besides, in the present embodiment, the charge joint 110C of the canister 110 is provided on the lowermost side of the charge hose 122. Therefore, valley piping of the charge hose 122 can be prevented, and it is unnecessary to newly provide a drain hose for draining the fuel, so that a reduction in cost can be realized.

The aforementioned embodiment is merely an embodiment of the present invention, and arbitrary modifications and applications are possible.

There has been described a configuration in which the bending portions 101A, 148A and 128A of the fuel hose 101, the sub-harness 148 and the second purge hose 128 correspond to the bent parts between the supporting portions 104, 150 and 24C1 on the body frame 12 side and the supporting portions 103, 149 and 153 on the unit swing engine 13 side. However, arbitrary bent parts of the fuel hose 101, the sub-harness 148 and the second purge hose 128 may constitute the bending portions, insofar as one-side ends of the fuel hose 101, the sub-harness 148 and the second purge hose 128 are fixed on the body frame 12 side, and other-side ends of them are fixed on the unit swing engine 13 side.

While the description has been made by taking the motorcycle 1 as an example of the saddle riding vehicle in the above embodiment, this is not limitative of the present invention.

### [Reference Signs List]

11: Step floor (Flat floor)
13: Unit swing engine (Engine)
27: Accommodation box
24: Upper cross member (Seat support stay)
35: Center lower cover (Under-seat cover)
38: Fuel tank
38A3: Uppermost end
101: Fuel hose
110: Canister
110C: Charge joint (Canister charge joint)
122: Charge hose (Hose)
123: First purge hose (Hose)
128: Second purge hose (Hose)
124: Fresh air introduction hose (Hose)
125: Drain hose (Hose)
127: Purge control valve
128A: Bending portion
133: Intake pipe (Intake pipe)
133A: Joint section
140, 141: Throttle cable
162: Downward projecting portion
164: Raised bottom section (Recess)

## Claims

1. A scooter-type vehicle having an underfloor tank with a fuel tank (38) disposed on a front side of an engine (13) and with a flat floor (11) provided on an upper side of the fuel tank (38),
wherein an accommodation box (27) is disposed on an upper side of the engine (13), **characterized in that**
a purge control valve (127) is disposed on a front side of the accommodation box (27), supported by a seat support stay (24), and disposed on a rear side of an under-seat cover (35).

2. The scooter-type vehicle according to claim 1, wherein
the purge control valve (127) is disposed above a canister (110), and
the purge control valve (127) is disposed at a position not overlapping with the accommodation box (27) in side view.

3. The scooter-type vehicle according to claim 2, wherein the accommodation box (27) is disposed on an upper side of the purge control valve (127) in plan view.

4. The scooter-type vehicle according to claim 2 or 3, wherein the canister (110) is disposed on one side from a vehicle width directionally vehicle center, and purge hoses (123, 128) are routed from one side to the other side along the seat support stay (24).

5. The scooter-type vehicle according to any one of claims 1 to 4, wherein a downward projecting portion (162) projecting downward from a front portion of the accommodation box (27) is provided, and the purge control valve (127) is disposed on a front side of the downward projecting portion (162).

6. The scooter-type vehicle according to any one of claims 1 to 5, wherein a recess (164) recessed on a vehicle rear side of a front portion of the accommodation box (27) is provided in plan view.

7. The scooter-type vehicle according to any one of claims 1 to 6, wherein a connection section (133A) connecting purge hoses (123, 128) and an intake pipe (133) is present on an opposite side of an intake passage (130) from throttle cables (140, 141) in a vehicle width direction.

8. The scooter-type vehicle according to any one of claims 1 to 7, wherein a bending portion (128A) of a purge hose (128) is provided on an opposite side of an intake passage (130) from a fuel hose (101) in the vehicle width direction.

9. The scooter-type vehicle according to any one of claims 1 to 8, wherein
the fuel tank (38) is disposed on a front side of the engine (13),
a lengthwise direction of a canister (110) is disposed to be oriented in a longitudinal vehicle direction, hoses (122, 123, 124, 125) extend in a longitudinal vehicle direction of the canister (110), and
the canister (110) is disposed at a position overlapping with the fuel tank (38) in side view and is disposed below an uppermost end (38A3) of the fuel tank (38) .

10. The scooter-type vehicle according to any one of claims 1 to 9, wherein a canister charge joint (110C) is provided on a lowermost side of a charge hose (122).

## Patentansprüche

1. Rollerartiges Fahrzeug, das einen Unterbodentank mit einem Kraftstofftank (38) aufweist, der an einer Vorderseite eines Motors (13) angeordnet ist, und mit einem flachen Boden (11), der an einer Oberseite des Kraftstofftanks (38) vorgesehen ist,
wobei ein Aufnahmekasten (27) an einer Oberseite des Motors (13) angeordnet ist, **dadurch gekennzeichnet, dass**
ein Spülsteuerventil (127) an einer Vorderseite des Aufnahmekastens (27) angeordnet ist, von einer Sitztragstrebe (24) getragen ist und an einer Rückseite einer unteren Sitzabdeckung (35) angeordnet ist.

2. Das rollerartige Fahrzeug nach Anspruch 1, wobei
das Spülsteuerventil (127) über einem Kanister (110) angeordnet ist und
das Spülsteuerventil (127) an einer Position angeordnet ist, die in Seitenansicht mit dem Aufnahmekasten (27) nicht überlappt.

3. Das rollerartige Fahrzeug nach Anspruch 2, wobei der Aufnahmekasten (27) in Draufsicht an einer Oberseite des Spülsteuerventils (127) angeordnet ist.

4. Das rollerartige Fahrzeug nach Anspruch 2 oder 3, wobei der Kanister (110) in Fahrzeugbreitenrichtung an einer Seite von einer Fahrzeugmitte angeordnet ist und Spülschläuche (123, 128) von einer Seite zur anderen Seite entlang der Sitztragstrebe (24) verlegt sind.

5. Das rollerartige Fahrzeug nach einem der Ansprüche 1 bis 4, wobei ein unten vorstehender Abschnitt (162) vorgesehen ist, der von einem vorderen Abschnitt des Aufnahmekastens (27) nach unten vorsteht, und das Spülsteuerventil (127) an einer Vorderseite des nach unten vorstehenden Abschnitts (162) angeordnet ist.

6. Das rollerartige Fahrzeug nach einem der Ansprüche 1 bis 5, wobei eine Vertiefung (164) vorgesehen ist, die in Draufsicht an einer Fahrzeugrückseite eines vorderen Abschnitts des Aufnahmekastens (27) vertieft ist.

7. Das rollerartige Fahrzeug nach einem der Ansprüche 1 bis 6, wobei ein Verbindungsabschnitt (133A), der Spülschläuche (123, 128) mit einem Einlassrohr (133) verbindet, in Fahrzeugbreitenrichtung an einer von Drosselseilen (140, 141) entgegengesetzten Seite eines Einlasskanals (130) vorhanden ist.

8. Das rollerartige Fahrzeug nach einem der Ansprüche 1 bis 7, wobei ein Biegungsabschnitt (128A) eines Spülschlauchs (128) an einer von einem Kraftstoffschlauch (101) in der Fahrzeugbreitenrichtung entgegengesetzten Seite eines Einlasskanals (130) vorgesehen ist.

9. Das rollerartige Fahrzeug nach einem der Ansprüche 1 bis 8, wobei
der Kraftstofftank (38) an einer Vorderseite des Motors (13) angeordnet ist,
eine Längsrichtung eines Kanisters (110) in Fahrzeuglängsrichtung orientiert angeordnet ist, sich Schläuche (122, 123, 124, 125) in Fahrzeuglängsrichtung des Kanisters (110) erstrecken, und
der Kanister (110) an einer Position angeordnet ist, die in Seitenansicht mit dem Kraftstofftank (38) überlappt, und unter einem obersten Ende (38A3) des Kraftstofftanks (38) angeordnet ist.

10. Das rollerartige Fahrzeug nach einem der Ansprüche 1 bis 9, wobei ein Kanisterladeanschluss (110C) an einer untersten Seite eines Ladeschlauchs (122) vorgesehen ist.

## Revendications

1. Véhicule de type scooter présentant un réservoir sous le plancher avec un réservoir de carburant (38) disposé sur un côté avant d'un moteur (13) et avec un plancher plat (11) prévu sur un côté supérieur du réservoir de carburant (38),
dans lequel un carter de logement (27) est disposé sur un côté supérieur du moteur (13), **caractérisé en ce que**
une vanne de commande de purge (127) est disposée sur un côté avant du carter de logement (27), supportée par un étai de support de siège (24), et disposée sur un côté arrière d'un couvercle sous siège (35).

2. Véhicule de type scooter selon la revendication 1, dans lequel
la vanne de commande de purge (127) est disposée au-dessus d'une cartouche (110), et
la vanne de commande de purge (127) est disposée à une position qui ne chevauche pas le carter de logement (27) en vue latérale.

3. Véhicule de type scooter selon la revendication 2, dans lequel le carter de logement (27) est disposé sur un côté supérieur de la vanne de commande de purge (127) en vue en plan.

4. Véhicule de type scooter selon la revendication 2 ou 3, dans lequel la cartouche (110) est disposée sur un côté d'un centre de véhicule dans la direction de largeur de véhicule, et des flexibles de purge (123, 128) sont acheminés d'un côté à l'autre côté le long de l'étai de support de siège (24).

5. Véhicule de type scooter selon l'une quelconque des revendications 1 à 4, dans lequel une partie saillante vers le bas (162) faisant saillie vers le bas depuis une partie avant du carter de logement (27) est prévue, et la vanne de commande de purge (127) est disposée sur un côté avant de la partie saillante vers le bas (162).

6. Véhicule de type scooter selon l'une quelconque des revendications 1 à 5, dans lequel un évidement (164) évidé sur un côté arrière de véhicule d'une partie avant du carter de logement (27) est prévu en vue en plan.

7. Véhicule de type scooter selon l'une quelconque des revendications 1 à 6, dans lequel une section de raccordement (133A) raccordant des flexibles de purge (123, 128) et un tuyau d'admission (133) est présente sur un côté opposé d'un passage d'admission (130) depuis des câbles d'accélérateur (140, 141) dans une direction de largeur de véhicule.

8. Véhicule de type scooter selon l'une quelconque des revendications 1 à 7, dans lequel une partie de flexion (128A) d'un flexible de purge (128) est prévue sur un côté opposé d'un passage d'admission (130) depuis un flexible de carburant (101) dans la direction de largeur de véhicule.

9. Véhicule de type scooter selon l'une quelconque des revendications 1 à 8, dans lequel
le réservoir de carburant (38) est disposé sur un côté avant du moteur (13),
une direction de longueur d'une cartouche (110) est disposée pour être orientée dans une direction longitudinale de véhicule, des flexibles (122, 123, 124, 125) s'étendent dans une direction longitudinale de véhicule de la cartouche (110), et
la cartouche (110) est disposée à une position chevauchant le réservoir de carburant (38) en vue latérale et est disposée au-dessous d'une extrémité la plus haute (38A3) du réservoir de carburant (38).

10. Véhicule de type scooter selon l'une quelconque des revendications 1 à 9, dans lequel un raccord de chargement de cartouche (110C) est prévu sur un côté le plus bas d'un flexible de chargement (122).
